# EUROPEAN PATENT APPLICATION

(11) **EP 4 645 115 A1**
(43) Date of publication of application: **05.11.2025**
(21) Application number: 23910856.6
(22) Date of filing: 28.12.2023
(51) Int. Cl.: G06F 16/901

(54) **METHOD AND APPARATUS FOR INTELLIGENTLY RECOMMENDING ILLUMINATION SCENE TEMPLATE, AND ELECTRONIC DEVICE**

(30) Priority: 28.12.2022 CN 202211702107
(71) Applicant: Suzhou Opple Lighting Co., Ltd., Suzhou, Jiangsu 215211 (CN); Opple Lighting Co,. Ltd., Shanghai 201201 (CN)
(72) Inventor: FENG, Yunlong, Suzhou, Jiangsu 215211 (CN); XUE, Changfu, Suzhou, Jiangsu 215211 (CN); XU, Xingxing, Suzhou, Jiangsu 215211 (CN)
(74) Representative: Winter, Brandl - Partnerschaft mbB
(86) International application number: PCT/CN2023/142861
(87) International publication number: WO 2024/140940

(57) **Abstract**

The present application provides a method and an apparatus for intelligently recommending a lighting scene template, and an electronic device, the method includes: obtaining room information and a project category, in which the room information includes a device list for lighting in a room and a room attribute; obtaining a basic scene template list that is adapted based on the project category and the room attribute, in which the basic scene template list includes a plurality of basic scene templates, and each of the basic scene templates includes a device preset parameter for lighting in the room; and adjusting each of the basic scene templates in the basic scene template list based on the device list, to obtain a recommended scene template list, in which the recommended scene template list includes a plurality of recommended scene templates.

## Description

### CROSS-REFERENCE TO RELATED APPLICATION

This application claims priority to Chinese Patent Application No. 2022117021071 filed on December 28, 2022, entitled "method and apparatus for intelligently recommending lighting scene template, and electronic device", which is incorporated herein by reference in its entirety.

### TECHNICAL FIELD

The present application relates to the field of smart lighting technology, and in particular to a method and an apparatus for intelligently recommending a lighting scene template, and an electronic device.

### BACKGROUND

In the lighting field of the current Internet of Things ecosystem, after users receive smart lighting devices, in addition to the standard joining for a control system, a complex lighting scene effect setting process is generally needed. Ordinary users are often reluctant to set lighting scenes because there are many process steps and complex settings in this process. Even if there are lighting designers to teach and set lighting scenes, they often take a long time to adjust the effects one by one because of many steps, resulting in a large amount of waste construction hours.

In situations where lighting scene calling is required, it is often necessary to set some commonly used lighting scenes for the current space. The common method is that users manually add devices to the scene creation process, adjust the effects one by one, and finally distribute and save them. This process is cumbersome.

Some technical solutions adopt the method of solidifying the scene effect. For example, directly writing the scene to the device side before the device leaves the factory. Although the scene can be used faster, the effect is very fixed. When the category of the lighting device in the room is different from the preset scene, the due hierarchical lighting effects will be completely lost.

Some technical solutions are to preset some fixed parameter combinations in the cloud, but the effect is very single, the lighting parameters are the same, which can only meet the most basic applications and cannot achieve hierarchical and regional lighting effects.

The information disclosed in this background section is merely intended to enhance the understanding of the general background of the present application and should not be taken as an admission or any form of suggestion that the information constitutes the prior art that is already known to those skilled in the art.

### SUMMARY

In view of the problems existing in the existing technology, the present application provides a method and an apparatus for intelligently recommending a lighting scene template, and an electronic device, which greatly improve the setting efficiency of lighting scenes.

The technical solution of the present application provides a method for intelligently recommending a lighting scene template, which comprises:
obtaining room information and a project category, in which the room information comprises a device list for lighting in a room and a room attribute;
obtaining a basic scene template list that is adapted based on the project category and the room attribute, in which the basic scene template list comprises a plurality of basic scene templates, and each of the basic scene templates comprises a device preset parameter for lighting in the room; and
adjusting each of the basic scene templates in the basic scene template list based on the device list, to obtain a recommended scene template list, wherein the recommended scene template list in which a plurality of recommended scene templates.

Optionally, the method of adjusting each of the basic scene templates in the basic scene template list based on the device list comprises:
obtaining basic classification information of each device in the device list, in which the basic classification information is preset when the device leaves a factory;
obtaining a device category of the device based on the basic classification information;
obtaining a device category parameter based on device categories of all devices in the device list; and
adjusting each of the base scene templates in the base scene template list based on the device category parameter.

Optionally, the device category comprises at least one of following items: a basic lighting device, a key lighting device, and a mood lighting device.

Optionally, the recommended scene template comprises at least one of following parameters: a project category of a scene template, a serial number of the scene template, covered device category information, brightness of a device corresponding to each device category, color temperature of a device corresponding to each device category, and a switching state of a device corresponding to each device category.

Optionally, the project category comprises at least one of following items: a commercial project, a household project, a hotel project, and a school project.

Optionally, the room attribute comprises at least one of following items: an entrance hall, a living room, a bedroom, a kitchen, a bathroom, a study room, an office, and an exhibition hall.

Optionally, the method of obtaining room information comprises:
obtaining a room number; and
querying a preset table to obtain the device list based on the room number.

The technical solution of the present application further provides a method for intelligently recommending a lighting scene template, which comprises:
obtaining room information and a recommended scene template list corresponding to the room information, in which the room information comprises a device list for lighting in the room and a room attribute, the recommended scene template list comprises a plurality of recommended scene templates, and each of the recommended scene templates comprises a device preset parameter for lighting in the room; and
rendering room light scene images under different recommended scene templates based on each of the recommended scene templates, for preview.

The technical solution of the present application further provides an apparatus for intelligently recommending a lighting scene template, the apparatus adopts the method for intelligently recommending a lighting scene template according to any one of the above embodiments, and the apparatus comprises:
an obtaining module, configured to obtain room information and a project category, in which the room information comprises a device list for lighting in a room and a room attribute;
a basic scene module, configured to obtain a basic scene template list that is adapted based on the project category and the room attribute, in which the basic scene template list comprises a plurality of basic scene templates, and each of the basic scene templates comprises a device preset parameter for lighting in the room; and
a recommended scene module, configured to adjust each of the basic scene templates in the basic scene template list based on the device list, to obtain a recommended scene template list, in which the recommended scene template list comprises a plurality of recommended scene templates.

Optionally, the recommended scene module comprises:
a basic classification unit, configured to obtain basic classification information of each device in the device list, in which the basic classification information is preset when the device leaves a factory;
a device category unit, configured to obtain a device category of the device based on the basic classification information;
a category parameter unit, configured to obtain a device category parameter based on device categories of all devices in the device list; and
an adjustment unit, configured to adjust each of the base scene templates in the base scene template list based on the device category parameter.

Optionally, the apparatus comprises:
a front end, comprising the obtaining module; and
a back end, comprising the basic scene module and the recommended scene module, wherein the back end receives the room information and the project category from the front end through a request interface, and the back end transmits the recommended scene template list to the front end through a return interface.

Optionally, the basic scene module comprises:
an update unit, configured to obtain a new basic scene template from a cloud server.

The technical solution of the present application further provides an electronic device, which comprises a memory, a processor, and a computer program stored on the memory and executable on the processor, when the processor executes the program, the processor implements steps of the method for intelligently recommending a lighting scene template according to any one of the above embodiments.

The technical solution of the present application further provides a lighting system, which comprises the electronic device.

The technical solution of the present application further provides a non-transitory computer-readable storage medium, stored with a computer program thereon, when the computer program is executed by a processor, steps of the method for intelligently recommending a lighting scene template according to any one of the above embodiments.

In the method of intelligently recommending a lighting scene template provided by the technical solution of the present application, the basic scene template is determined based on the room attribute and the project category, and then the basic scene template is adjusted based on the device list to form the recommended scene template. Therefore, the method of intelligently recommending a lighting scene template can achieve rapid scene-based lighting parameter configuration and improve the deployment efficiency of lighting systems for different types of rooms and different lighting device combinations.

### BRIEF DESCRIPTION OF DRAWINGS

In order to explain the technical solutions in the present application or the prior art more clearly, the following will briefly introduce the drawings that need to be used in the description of the embodiments or the prior art. Obviously, the drawings in the following description are some embodiments of the present application, those of ordinary skill in the art can also obtain other drawings based on these drawings without creative efforts.
Fig. 1 is a schematic flowchart of a method for intelligently recommending a lighting scene template provided by an embodiment of the present application;
Fig. 2 is a schematic flowchart of obtaining a recommended scene template list by a back end provided by an embodiment of the present application;
Fig. 3 is a schematic diagram of the entire process of a front end and a back end provided by an embodiment of the present application;
Fig. 4 is a schematic structural diagram of an apparatus for intelligent recommending a lighting scene template provided by an embodiment of the present application;
Fig. 5 is a schematic flowchart of obtaining a scene through a template provided by an embodiment of the present application;
Fig. 6 is a schematic diagram of a scene template loading process provided by an embodiment of the present application; and
Fig. 7 is a schematic diagram of a physical structure of an electronic device provided by an embodiment of the present application.

### DETAILED DESCRIPTION

In order to make the purpose, technical solutions and advantages of the present application clearer, the technical solutions in the present application will be clearly and completely described below in conjunction with the drawings in the present application. Obviously, the described embodiments are some of the embodiments of the present application, rather than all embodiments. Based on the embodiments in the present application, all other embodiments obtained by those of ordinary skill in the art without creative efforts fall within the protection scope of the present application.

The method for intelligently recommending a lighting scene template provided by the embodiments of the present application will be described in detail below with reference to the accompanying drawings through specific embodiments and application scenarios.

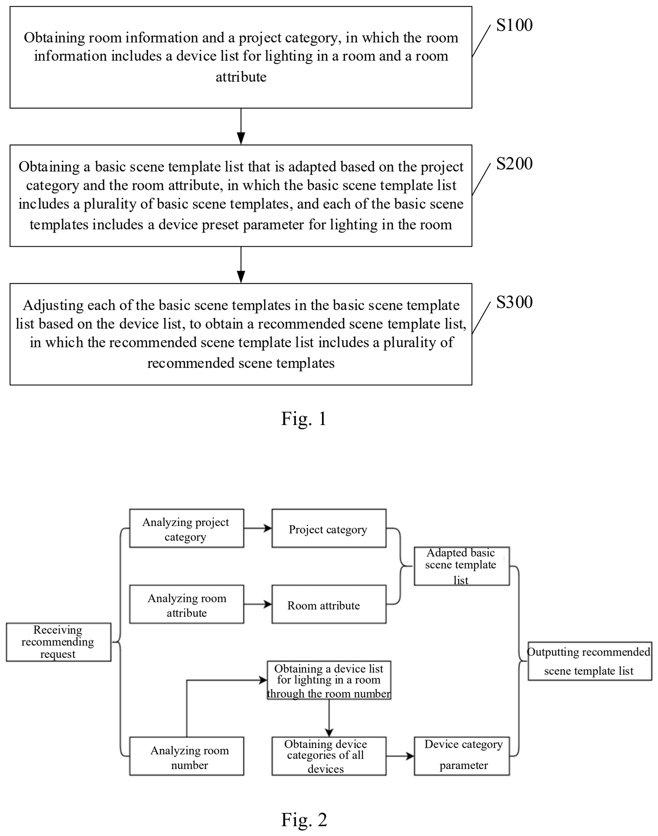

Fig. 1 is a schematic flowchart of a method for intelligently recommending a lighting scene template provided by an embodiment of the present application. As shown in Fig. 1, the method for intelligently recommending a lighting scene template provided by this embodiment may include the following steps.

In some embodiments, the method is executed in a back end, and there is a front end used to initiate a request for scene recommendation, obtain a recommended scene template generated by the back end, and apply a specific scene template to the lighting device in the actual room.

S100. obtaining room information and a project category, in which the room information includes a device list for lighting in a room and a room attribute.

Optionally, the project category includes at least one of the following items:
a commercial project, a household project, a hotel project, and a school project.

Optionally, the method for obtaining the room information includes:
obtaining a room number; and
querying a preset table to obtain the device list based on the room number.

S200. obtaining a basic scene template list that is adapted based on the project category and the room attribute, in which the basic scene template list includes a plurality of basic scene templates, and each of the basic scene templates includes a device preset parameter for lighting in the room.

Optionally, the room attribute includes at least one of the following items:
an entrance hall, a living room, a bedroom, a kitchen, a bathroom, a study room, an office, and an exhibition hall.

In some embodiments, the basic scene template list includes several base scene templates.

In some embodiments, the basic scene template comes from a preset scene template library, and the scene template library can be updated by the back end at any time, the template solution is more flexible, and template materials can be adjusted at any time as needed.

In some embodiments, the room attribute is classified according to the uses of the room. Further, for rooms whose project category is household project, the room attribute includes: an entrance hall, a living room, a bedroom, a kitchen, a bathroom, etc.

In some embodiments, when a user creates a room in the home, the front end will assign a matching attribute value to the newly created room according to the user's selection. After the room is created, the room attribute parameter will be fixed and will not change. When the back end obtains the room information, it includes obtaining the room attribute determined by the user from the front end.

In some embodiments, the back end dynamically matches a scene template scheme required for the current room attribute based on the obtained current project category and the room attribute.

In some embodiments, the room attribute determines which scenes are required for the current room, which will affect the adapted basic scene template. For example, the room attribute is the living room, and the adapted basic scene template includes a movie viewing scene, a leisure scene, and a party scene. If the room attribute is bathroom, it is obvious that the adapted basic scene template does not include a movie viewing party, the leisure scene, and the party scene.

S300. adjusting each of the basic scene templates in the basic scene template list based on the device list, to obtain a recommended scene template list, in which the recommended scene template list includes a plurality of recommended scene templates.

In some embodiments, the recommended scene template list includes several recommended scene templates.

In some embodiments, the parameter content in the basic scene template is dynamically adjusted according to the device list in the room, for example, whether the room includes a main light, a downlight, and a light strip. Furthermore, for example, if there are the main light and the downlight in the room, but there is no light strip, the brightness of the downlight in some scene templates is changed from off state (initial value in the template) to 20% (dynamically adjusted assigned value) of the maximum brightness.

Optionally, the method of adjusting each of the basic scene templates in the basic scene template list based on the device list includes:
obtaining basic classification information of each device in the device list, in which the basic classification information is preset when the device leaves a factory;
obtaining a device category of the device based on the basic classification information;
obtaining a device category parameter based on device categories of all devices in the device list; and
adjusting each of the base scene templates in the base scene template list based on the device category parameter.

Fig. 2 is a schematic flowchart of obtaining a recommended scene template list by the back end provided by an embodiment of the present application. As shown in Fig. 2, the room information includes a room number. The room number is matched with the room information database in the back end, and then the device list for lighting in the room is obtained, and the device category parameter is obtained. After the basic scene template list is adjusted, a recommended scene template list is obtained.

In some embodiments, the device category to which various lighting devices belong are preset in the front end. Specifically, the device category is assigned based on the basic classification mark (classsku) preset when the lighting device product leaves the factory. Since the number of basic classification marks is too large and cannot be used as core elements for obtaining the recommended scene template, a more macroscopic classification parameter such as the device category parameter is required.

In some embodiments, when adding other devices with the same basic classification mark, the same device category is directly assigned.

It should be noted that the room attribute and the device category parameter are used as input conditions, and are input to the intelligent recommendation algorithm of the back end, a lighting scene template suitable for the device category distribution of the current room is output, so that the lighting scene effect that the user most wishes to use is recommended to the user through the scene template method.

Optionally, the device category includes at least one of the following items:
a basic lighting device, a key lighting device, and a mood lighting device.

Specifically, regarding the classification of device category, for example, large lighting devices such as chandeliers are generally classified as basic lighting devices, light strips are generally classified as mood lighting devices, and downlights and rail lights are generally classified as key lighting devices.

It should be noted that through the division based on lighting uses in the lighting field: the basic lighting device, the key lighting device, and the mood lighting device, these three uses are also distinguished in the recommended scene template, thereby achieving a hierarchical lighting scene effect.

Optionally, each recommended scene template in the recommended scene template list includes at least one of the following parameters:
a project category of a scene template, a serial number of the scene template, covered device category information, brightness of a device corresponding to each device category, color temperature of a device corresponding to each device category, and a switching state of a device corresponding to each device category. The main use of the scene template is to quickly apply the lighting parameter corresponding to the effect to the device, to save the time spent on adjusting device parameters one by one for users.

This embodiment can realize rapid scene-based lighting parameter configuration and improve the deployment efficiency of the lighting system for different types of rooms and different lighting device combinations.

This embodiment further provides another method for intelligently recommending a lighting scene template, which includes the following steps:
obtaining room information and a recommended scene template list corresponding to the room information, in which the room information includes a device list for lighting in the room and a room attribute, the recommended scene template list includes a plurality of recommended scene templates, and each of the recommended scene templates includes a device preset parameter for lighting in the room; and
rendering room light scene images under different recommended scene templates based on each of the recommended scene templates, for preview.

In some embodiments, the another method for intelligently recommending a lighting scene template provided by this embodiment is executed in the front end. Further, the front end and the back end are physically independent computers, or, as another parallel technical solution, the front end and the back end are physically the same computer, or, as yet another parallel technical solution, the front end and the back end are distributed in an array server as a virtual computer unit.

In some embodiments, the front end can implement the traditional method of adjusting the lighting devices one by one, and can also initiate the request for intelligently recommending a lighting scene template in this embodiment, and obtain the corresponding recommended scene template list. By recommending users to use scene templates for scene design, it avoids users' repetitive operations and solves the efficiency problem when setting scenes.

Furthermore, when users choose to create scenes through the template method, room information needs to be submitted to the back end through an interface to facilitate intelligent recommendation processing in the back end.

In some embodiments, the front end includes a scene interface. Through scene templates, the scene interface can provide the preview of recommended scene effects with one click and save the scene with one click, which greatly reduces the process of repeatedly adding and adjusting devices by users.

In some embodiments, operations supported by the scene interface include:
device selection, which can select or deselect devices; individual control, which supports the individual adjustment of the parameter of a certain device; batch control, which can control a certain parameter of all checked devices; scene preview, which can distribute the control parameter, and view specific scene effect; and scene saving, which can distribute the configuration parameter, and save the preset scene to the device.

In some embodiments, in order to facilitate users to quickly create scenes, the front end is required to support the directly generating of a scene that matches the scene template without preview. This requires the device side to support analyzing and processing the lighting parameters in the scene configuration message, and convert the relevant parameters into a rendered scene and save it to the device side, thereby enabling quick retrieval, one-click preview, and one-click save.

In some embodiments, after the recommended scene template is obtained by the front end, the front end analyzes the template through the agreed analyzing method, and can quickly apply the devices in the room to different device categories in the template, and assign parameter values to the corresponding devices in the recommended scene template.

In some embodiments, after the front end obtains the recommended scene template list and responses through the interface, the front end makes different rendering selections for the devices in the room according to whether the device category in the template exists.

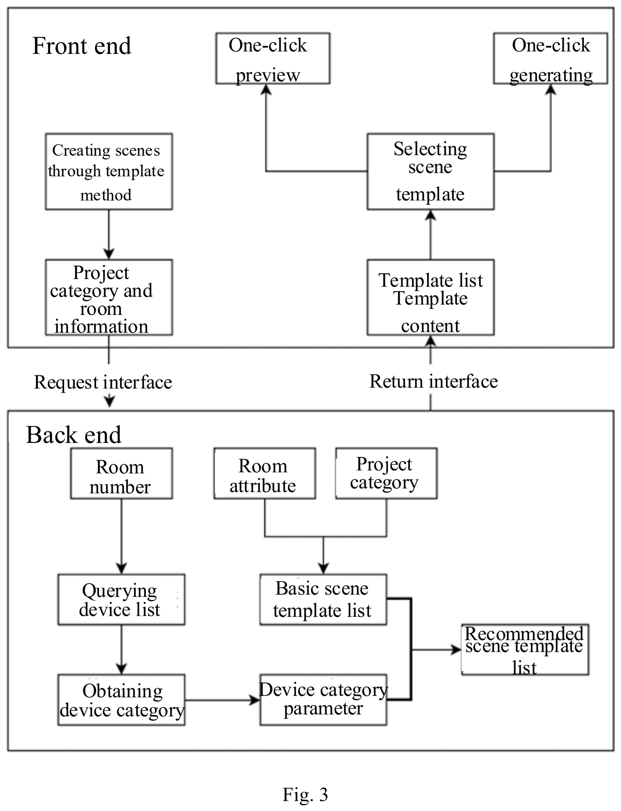

Fig. 3 is a schematic diagram of the entire process of the front end and back end provided by an embodiment of the present application. As shown in Fig. 3, the front end selects the method of creating scenes and obtains the recommended scene template list through the back end, then, all recommended scenes can be previewed on the front end and the recommended scene can be applied.

The apparatus for intelligently recommending a lighting scene template provided by this embodiment will be described below. The apparatus for intelligently recommending a lighting scene template described below and the method for intelligently recommending a lighting scene template described above may be referred to correspondingly to each other.

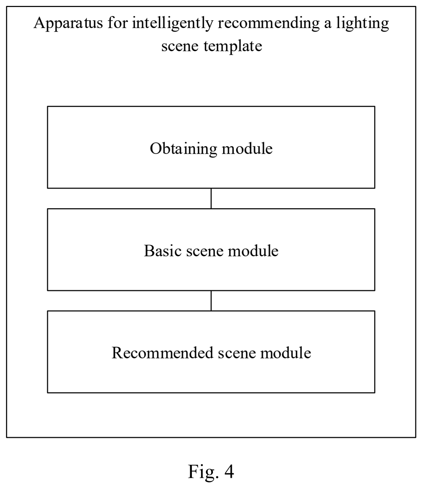

Fig. 4 is a schematic structural diagram of an apparatus for intelligently recommending a lighting scene template provided by an embodiment of the present application. As shown in Fig. 4, this embodiment also provides an apparatus for intelligently recommending a lighting scene template, which includes:
an obtaining module, configured to obtain room information and a project category, in which the room information includes a device list for lighting in a room and a room attribute;
a basic scene module, configured to obtain a basic scene template list that is adapted based on the project category and the room attribute, in which the basic scene template list includes a plurality of basic scene templates, and each of the basic scene templates includes a device preset parameter for lighting in the room; and
a recommended scene module, configured to adjust each of the basic scene templates in the basic scene template list based on the device list, to obtain a recommended scene template list, in which the recommended scene template list includes a plurality of recommended scene templates.

This embodiment can realize rapid scene-based lighting parameter configuration and improve the deployment efficiency of the lighting system for different types of rooms and different lighting device combinations.

Optionally, the recommended scene module includes:
a basic classification unit, configured to obtain basic classification information of each device in the device list, in which the basic classification information is preset when the device leaves a factory;
a device category unit, configured to obtain a device category of the device based on the basic classification information;
a category parameter unit, configured to obtain a device category parameter based on device categories of all devices in the device list; and
an adjustment unit, configured to adjust each of the base scene templates in the base scene template list based on the device category parameter.

Optionally, the apparatus includes:
a front end, including the obtaining module; and
a back end, including the basic scene module and the recommended scene module, in which the back end receives the room information and the project category from the front end through a request interface, and the back end transmits the recommended scene template list to the front end through a return interface.

Optionally, the basic scene module includes:
an update unit, configured to obtain a new basic scene template from a cloud server.

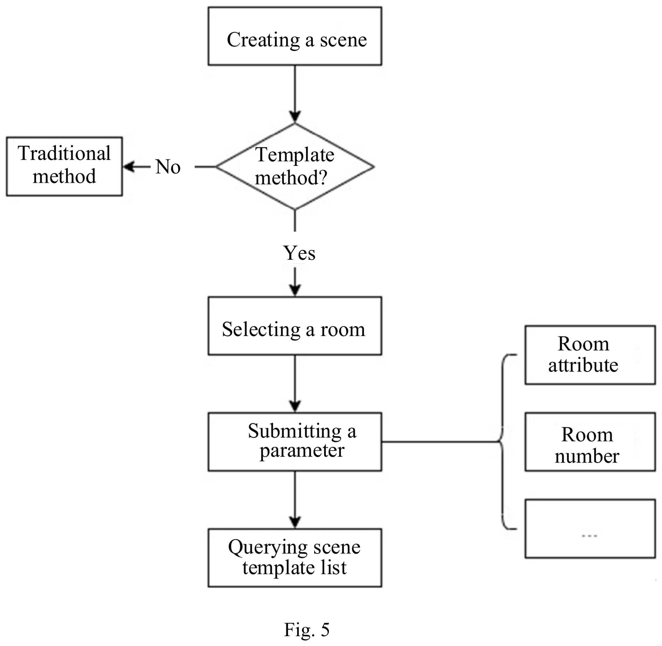

In some embodiments, Fig. 5 is a schematic flowchart of obtaining a scene through a template provided by an embodiment of the present application. As shown in Fig. 5, when the user selects to create a scene through a template method on the front end, the user needs to transfer the room attribute, the room number and other information to the back end through a request interface to facilitate the back end to perform intelligent recommendation processing.

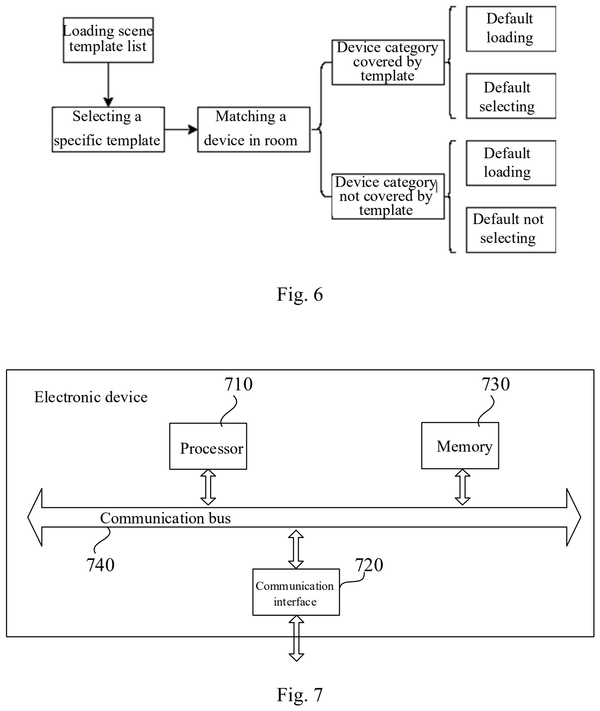

In some embodiments, Fig. 6 is a schematic diagram of a scene template loading process provided by an embodiment of the present application. As shown in Fig. 6, after the front end obtains the recommended scene template list through the return interface, according to whether the device category in the template exists, the front end makes different rendering choices for the devices in the room.

Fig. 7 is a schematic diagram of a physical structure of an electronic device provided by an embodiment of the present application. As shown in Fig. 7, the electronic device may include: a processor 710, a communication interface 720, a memory 730 and a communication bus 740, the processor 710, the communication interface 720, and the memory 730 communicate with each other through the communication bus 740. The processor 710 can call logic instructions in the memory 730 to execute a method for intelligently recommending a lighting scene template, the method includes:
obtaining room information and a project category, in which the room information includes a device list for lighting in a room and a room attribute;
obtaining a basic scene template list that is adapted based on the project category and the room attribute, in which the basic scene template list includes a plurality of basic scene templates, and each of the basic scene templates includes a device preset parameter for lighting in the room; and
adjusting each of the basic scene templates in the basic scene template list based on the device list, to obtain a recommended scene template list, in which the recommended scene template list includes a plurality of recommended scene templates.

In addition, the above-mentioned logical instructions in the memory 730 can be implemented in the form of a software functional unit and can be stored in a computer-readable storage medium when sold or used as an independent product. Based on this understanding, the technical solution of the present application, or the part that contributes to the prior art, or the part of the technical solution can be embodied in the form of a software product, and the computer software product is stored in a storage medium, and includes several instructions to enable a computer device (which can be a personal computer, a server, or a network device, etc.) to perform all or part of the steps of the methods described in various embodiments of the present application. The aforementioned storage medium includes: a U disk, a mobile hard disk, a read-only memory (ROM), a random access memory (RAM), a magnetic disk, an optical disk, or other media that can store program codes.

On the other hand, the present application further provides a computer program product, which includes a computer program stored on a non-transitory computer-readable storage medium, and the computer program includes program instructions. When the program instructions are executed by a computer, the computer can execute the method for intelligently recommending a lighting scene template provided by each of the above methods, and the method includes:
obtaining room information and a project category, in which the room information includes a device list for lighting in a room and a room attribute;
obtaining a basic scene template list that is adapted based on the project category and the room attribute, in which the basic scene template list includes a plurality of basic scene templates, and each of the basic scene templates includes a device preset parameter for lighting in the room; and
adjusting each of the basic scene templates in the basic scene template list based on the device list, to obtain a recommended scene template list, in which the recommended scene template list includes a plurality of recommended scene templates.

On the other hand, the present application further provides a non-transitory computer-readable storage medium on which a computer program is stored. When the computer program is executed by a processor, the above-mentioned method for intelligently recommending a lighting scene template is implemented, and the method includes:
obtaining room information and a project category, in which the room information includes a device list for lighting in a room and a room attribute;
obtaining a basic scene template list that is adapted based on the project category and the room attribute, in which the basic scene template list includes a plurality of basic scene templates, and each of the basic scene templates includes a device preset parameter for lighting in the room; and
adjusting each of the basic scene templates in the basic scene template list based on the device list, to obtain a recommended scene template list, in which the recommended scene template list includes a plurality of recommended scene templates.

The device embodiments described above are only illustrative, the units described as separate components may be or may not be physically separate, and the components shown as units may or may not be physical units, that is, they may be located in one place, or they can be distributed to multiple network units. Some or all of the modules can be selected according to actual needs to achieve the purpose of the solution of the embodiments. Those of ordinary skill in the art can understand and implement it without creative effort.

Through the above description of the embodiments, those skilled in the art can clearly understand that each embodiment can be implemented by means of software plus the necessary general hardware platform, and of course, each embodiment can also be implemented by hardware. Based on this understanding, the essence of the above technical solution or the part that contributes to the existing technology can be embodied in the form of a software product, and the computer software product can be stored in a computer-readable storage medium, such as a ROM/RAM, a magnetic disk, an optical disk, etc., which includes instructions for causing a computer device (which can be a personal computer, a server, or a network device, etc.) to perform the methods described in various embodiments or parts of the embodiments.

Finally, it should be noted that: the above embodiments are only used to illustrate but not to limit the technical solution of the present application; although the present application has been described in detail with reference to the foregoing embodiments, those of ordinary skill in the art should understand that they can still modify the technical solutions described in the foregoing embodiments, or make equivalent replacements for some of the technical features. However, these modifications or replacements do not cause the essence of the corresponding technical solution to deviate from the scope of the technical solution of each embodiment of the present application.

## Claims

1. A method for intelligently recommending a lighting scene template, comprising:
obtaining room information and a project category, wherein the room information comprises a device list for lighting in a room and a room attribute;
obtaining a basic scene template list that is adapted based on the project category and the room attribute, wherein the basic scene template list comprises a plurality of basic scene templates, and each of the basic scene templates comprises a device preset parameter for lighting in the room; and
adjusting each of the basic scene templates in the basic scene template list based on the device list, to obtain a recommended scene template list, wherein the recommended scene template list comprises a plurality of recommended scene templates.

2. The method for intelligently recommending a lighting scene template according to claim 1, wherein the method of adjusting each of the basic scene templates in the basic scene template list based on the device list comprises:
obtaining basic classification information of each device in the device list, wherein the basic classification information is preset when the device leaves a factory;
obtaining a device category of the device based on the basic classification information;
obtaining a device category parameter based on device categories of all devices in the device list; and
adjusting each of the base scene templates in the base scene template list based on the device category parameter.

3. The method for intelligently recommending a lighting scene template according to claim 2, wherein the device category comprises at least one of following items: a basic lighting device, a key lighting device, and a mood lighting device.

4. The method for intelligently recommending a lighting scene template according to claim 2 or 3, wherein the recommended scene template comprises at least one of following parameters: a project category of a scene template, a serial number of the scene template, covered device category information, brightness of a device corresponding to each device category, color temperature of a device corresponding to each device category, and a switching state of a device corresponding to each device category.

5. The method for intelligently recommending a lighting scene template according to claim 1 or 2, wherein the project category comprises at least one of following items: a commercial project, a household project, a hotel project, and a school project.

6. The method for intelligently recommending a lighting scene template according to claim 1 or 2, wherein the room attribute comprises at least one of following items:
an entrance hall, a living room, a bedroom, a kitchen, a bathroom, a study room, an office, and an exhibition hall.

7. The method for intelligently recommending a lighting scene template according to claim 1, wherein the method of obtaining room information comprises:
obtaining a room number; and
querying a preset table to obtain the device list based on the room number.

8. A method for intelligently recommending a lighting scene template, comprising:
obtaining room information and a recommended scene template list corresponding to the room information, wherein the room information comprises a device list for lighting in the room and a room attribute, the recommended scene template list comprises a plurality of recommended scene templates, and each of the recommended scene templates comprises a device preset parameter for lighting in the room; and
rendering room light scene images under different recommended scene templates based on each of the recommended scene templates, for preview.

9. An apparatus for intelligently recommending a lighting scene template, wherein the apparatus adopts the method for intelligently recommending a lighting scene template according to any one of claims 1-7, and the apparatus comprises:
an obtaining module, configured to obtain room information and a project category, wherein the room information comprises a device list for lighting in a room and a room attribute;
a basic scene module, configured to obtain a basic scene template list that is adapted based on the project category and the room attribute, wherein the basic scene template list comprises a plurality of basic scene templates, and each of the basic scene templates comprises a device preset parameter for lighting in the room; and
a recommended scene module, configured to adjust each of the basic scene templates in the basic scene template list based on the device list, to obtain a recommended scene template list, wherein the recommended scene template list comprises a plurality of recommended scene templates.

10. The apparatus for intelligently recommending a lighting scene template according to claim 9, wherein the recommended scene module comprises:
a basic classification unit, configured to obtain basic classification information of each device in the device list, wherein the basic classification information is preset when the device leaves a factory;
a device category unit, configured to obtain a device category of the device based on the basic classification information;
a category parameter unit, configured to obtain a device category parameter based on device categories of all devices in the device list; and
an adjustment unit, configured to adjust each of the base scene templates in the base scene template list based on the device category parameter.

11. The apparatus for intelligently recommending a lighting scene template according to claim 9, wherein the apparatus comprises:
a front end, comprising the obtaining module; and
a back end, comprising the basic scene module and the recommended scene module, wherein the back end receives the room information and the project category from the front end through a request interface, and the back end transmits the recommended scene template list to the front end through a return interface.

12. The apparatus for intelligently recommending a lighting scene template according to claim 9, wherein the basic scene module comprises:
an update unit, configured to obtain a new basic scene template from a cloud server.

13. An electronic device, comprising a memory, a processor, and a computer program stored on the memory and executable on the processor, wherein when the processor executes the program, the processor implements steps of the method for intelligently recommending a lighting scene template according to any one of claims 1-7 or claim 8.

14. A lighting system, comprising the electronic device according to claim 13.

15. A non-transitory computer-readable storage medium, stored with a computer program thereon, wherein when the computer program is executed by a processor, steps of the method for intelligently recommending a lighting scene template according to any one of claims 1-7 or claim 8 are implemented.
